Europäisches Patentamt

European Patent Office

Office européen des brevets

(19)

(11) Numéro de publication : **0 090 730**
**B1**

# (12) FASCICULE DE BREVET EUROPÉEN

(45) Date de publication du fascicule du brevet :
28.05.86

(21) Numéro de dépôt : **83400616.5**

(22) Date de dépôt : **24.03.83**

(51) Int. Cl.⁴ : **G 01 N 3/06, G 01 N 3/32**

(54) **Témoin de fatigue.**

(30) Priorité : **30.03.82 FR 8205833**

(43) Date de publication de la demande :
**05.10.83 Bulletin 83/40**

(45) Mention de la délivrance du brevet :
**28.05.86 Bulletin 86/22**

(84) Etats contractants désignés :
**AT BE CH DE GB IT LI NL SE**

(56) Documents cités :
**EP-A- 0 032 101**
**US-A- 2 920 480**
**US-A- 4 164 874**

(73) Titulaire : **S.T.A.S. SOCIETE TECHNIQUE D'ACCES-
SOIRES SPECIALISES Société Anonyme**
**77, rue Henri Brisson**
**F.78500 Sartrouville (FR)**

(72) Inventeur : **Archer, Michel**
**55, avenue des Gressets**
**F-78170 La Celle-St. Cloud (FR)**

(74) Mandataire : **Boivin, Claude**
**9, rue Edouard-Charton**
**F-78000 Versailles (FR)**

Jouve, 18, rue St-Denis, 75001 Paris, France

## Description

La présente invention concerne les témoins de fatigue pour pièce mécanique soumise à des efforts répétés, qui comportent deux éléments épais qui sont écartés l'un de l'autre et réunis l'un à l'autre par deux premiers côtés d'un voile mince muni d'une ou de deux fentes pratiquées respectivement dans un ou deux seconds côtés du voile mince, ces deux éléments épais étant incorporés à la pièce ou fixés à celle-ci de manière à se déplacer l'un par rapport à l'autre dans un plan qui est parallèle au plan du voile mince.

Elle concerne plus particulièrement les témoins de fatigue de ce genre dans lesquels les éléments épais sont disposés de manière à présenter un intervalle l'un par rapport à l'autre dans une direction sensiblement perpendiculaire à leur direction de déplacement relatif lorsque la pièce travaille, le voile mince étant ainsi soumis à un effort de cisaillement dans son plan, et dans lesquels la ou les fentes s'étendent depuis l'un ou les deux bords desdits deux seconds côtés dans ladite direction de déplacement relatif, cette direction correspondant ainsi à l'axe longitudinal de la ou des deux fentes, de sorte que, lorsque la pièce travaille, deux fissures apparaissent à partir desdits deux bords, s'étendent progressivement dans le voile mince, et finissent par atteindre chacune le bord opposé du voile mince ou rejoindre chacune la fissure issue de ce bord opposé, la zone centrale du voile étant ainsi détachée ou pratiquement détachée. Un témoin de fatigue de ce genre est décrit dans la demande européenne EP-A-0032101.

Ces témoins sont destinés essentiellement à indiquer la fatigue d'une pièce soumise à des efforts de traction ou de compression.

Mais dans la pratique, une pièce n'est pas soumise à une force de traction ou de compression pure ; elle est souvent soumise également à un effort de cisaillement ou à des couples de torsion ou de flexion. Ces efforts et ces couples parasites influent sur le fonctionnement du témoin de fatigue et il arrive dans la pratique, que le voile se détache pour une fatigue différente de celle pour laquelle le témoin a été étalonné.

La présente invention a pour objet un perfectionnement apporté au témoin de fatigue du type ci-dessus dans le but de remédier à cet inconvénient.

Selon la présente invention les éléments épais sont en outre réunis l'un à l'autre par deux jambes de force étroites et allongées disposées de part et d'autre du voile mince et dirigées perpendiculairement à l'axe longitudinal de la ou des fentes.

Dans un mode de réalisation avantageux de l'invention, l'ensemble formé par le voile et les parties épaisses avec leurs jambes de force est relié par des zones flexibles à la partie de fixation sur la pièce à surveiller.

Ces zones flexibles permettent au témoin de subir les déformations de flexion ou de torsion de la pièce sans que ces déformations influent sur le voile.

Ces zones flexibles peuvent être constituées par des ponts étroits ménagés transversalement au-delà des jambes de force, dans une même plaquette formant à la fois le témoin et ses parties de fixation sur la pièce à surveiller.

Il est avantageux de disposer sur une même pièce à surveiller plusieurs témoins de fatigue étalonnés pour des fatigues différentes. Il est ainsi possible à l'utilisateur de surveiller l'évolution dans le temps de la fatigue de la pièce. Dans ce cas, l'ensemble des témoins de fatigue peut être constitué par deux ou plusieurs voiles minces reliant l'un à l'autre deux mêmes éléments épais. Il est alors avantageux que les éléments épais soient reliés l'un à l'autre par des parties flexibles disposées entre les voiles adjacents. Ces ponts évitent l'influence sur les voiles des contraintes qui peuvent exister par suite de la longueur de l'ensemble des éléments épais.

On a décrit ci-après, à titre d'exemples non limitatifs, deux modes de réalisation d'un témoin de fatigue perfectionné selon la présente invention avec référence au dessin annexé dans lequel :

La Figure 1 est une vue en plan d'un premier mode de réalisation du témoin ;

La Figure 2 est une vue en plan d'un second mode de réalisation de ce témoin.

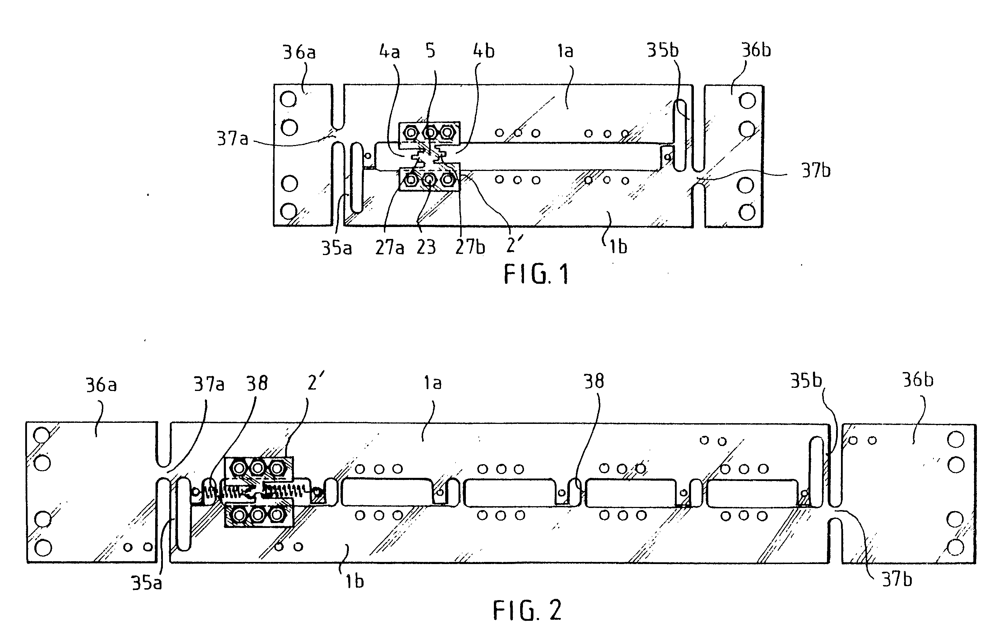

A la Figure 1, on voit le voile mince 2' qui est indépendant des parties épaisses 1a et 1b et fixé à celles-ci par des boulons 23. Le fond de chacune des fentes 4a et 4b comporte une patte 27a ou 27b qui est relevée à l'extérieur du plan du voile mince 2', l'une d'un côté de ce plan et l'autre du côté opposé. Chacune de ces pattes sert à l'accrochage de l'une des extrémités d'un ressort. Comme il est connu, lorsque la pièce sur laquelle le témoin est monté, se fatigue, des fissures se forment à partir du fond de chacune des fentes 4a et 4b. Lorsque les fissures provenant de l'une des fentes ont pratiquement rejoint les fissures provenant de l'autre fente, le ressort fait pivoter la partie centrale 5 du voile 2' ; cette partie centrale est ainsi détachée du voile ou ne lui reste attenante qu'en deux points si le métal du voile est ductile.

Mais les deux parties épaisses 1a et 1b au lieu d'être reliées l'une à l'autre uniquement par le voile mince 2', sont en outre reliées l'une à l'autre par deux jambes de force étroites et allongées 35a et 35b qui sont dirigées perpendiculairement à la direction de déplacement des parties 1a et 1b, c'est-à-dire à l'axe longitudinal des parties 4a et 4b.

Par ailleurs, l'ensemble formé par le voile 2' et les parties épaisses 1a et 1b avec leurs jambes de force 35a et 35b est prolongé longitudinalement par les parties 36a et 36b par lesquelles le témoin de fatigue peut être fixé sur la pièce à surveiller. Ces parties de fixation sont reliées audit ensemble par des ponts étroits 37a et 37b ménagés transversalement au-delà des jambes de force 35a et 35b et qui constituent des zones flexibles.

Lorsque la pièce à surveiller est soumise à un effort de traction ou de compression, cet effort est transmis par les ponts 37a et 37b aux parties épaisses 1a et 1b.

Les parties épaisses peuvent se déplacer longitudinalement l'une par rapport à l'autre car, pendant ce mouvement, les jambes de forces fléchissent. Le voile 2' est ainsi soumis à l'effort de cisaillement dans son plan qui est nécessaire au fonctionnement correct du témoin de fatigue. Mais la pièce à surveiller est de plus soumise à un effort de cisaillement qui tend à déplacer les deux parties de fixation 36a et 36b l'une par rapport à l'autre dans la direction des jambes de force, celles-ci qui sont alors soumises à une force de compression ou de traction, encaissent tout l'effort qui n'est ainsi pas transmis au voile 2'.

Si la pièce à surveiller est soumise à un couple parasite celui-ci n'a qu'une valeur minima par rapport à l'effort de traction ou de compression. Dans le cas d'un couple de torsion, les ponts 37a et 37b qui constituent des endroits de moindre résistance se tordent en empêchant la transmission de ce couple au voile 2'. Dans le cas d'un couple de flexion les ponts 37a et 37b fléchissent, et là encore, le couple n'est pas transmis au voile 2'.

On voit ainsi que, si la pièce à surveiller n'est pas soumise à cet effort de traction ou de compression pur, les efforts ou les couples parasites n'ont pratiquement aucun effet sur l'effort de cisaillement auquel est soumis le voile 2' et n'influent donc pas sur les indications données par le témoin de fatigue.

Dans le mode de réalisation représenté à la Figure 1 les parties épaisses 1a et 1b sont reliées l'une à l'autre par trois voiles dont un seul est représenté et dont chacun constitue un témoin de fatigue. Les voiles sont agencés pour que leur zone centrale 5 se détache pour des fatigues différentes. L'utilisateur peut ainsi surveiller l'évolution dans le temps de la fatigue de la pièce.

Le mode de réalisation de la Figure 2 est semblable dans ses grandes lignes à celui de la Figure 1 notamment en ce qu'il comprend plusieurs témoins de fatigue formés chacun d'un voile 2' fixé sur les mêmes parties épaisses 1a et 1b. Mais les parties 1a et 1b sont reliées l'une à l'autre non seulement par les jambes de force 35a et 35b mais aussi par des ponts flexibles 38 disposés entre deux témoins de fatigue adjacents. Ces ponts empêchent les influences parasites dues à la longueur des parties 1a et 1b.

## Revendications

1. Témoin de fatigue pour pièce mécanique soumise à des efforts répétés, comportant deux éléments épais (1a, 1b) qui sont écartés l'un de l'autre et réunis l'un à l'autre par deux premiers côtés d'un voile mince (2') muni d'une ou de deux fentes (4a, 4b), pratiquées respectivement dans un ou deux seconds côtés du voile mince, ces deux éléments épais étant incorporés à la pièce ou fixés à celle-ci de manière à se déplacer l'un par rapport à l'autre dans un plan qui est parallèle au plan du voile mince, dans lequel les éléments épais (1a, 1b) sont disposés de manière à présenter un intervalle l'un par rapport à l'autre dans une direction sensiblement perpendiculaire à leur direction de déplacement relatif lorsque la pièce travaille, le voile mince (2') étant ainsi soumis à un effort de cisaillement dans son plan, et dans lequel la ou les deux fentes (4a, 4b) s'étendent depuis l'un ou les deux bords desdits deux seconds côtés dans ladite direction de déplacement relatif, cette direction correspondant ainsi à l'axe longitudinal de la ou des deux fentes, de sorte que, lorsque la pièce travaille, deux fissures apparaissent à partir desdits deux bords, s'étendent progressivement dans le voile mince, et finissent par atteindre chacune le bord opposé du voile mince ou rejoindre chacune la fissure issue de ce bord opposé, la zone centrale (5) du voile mince étant ainsi détachée ou pratiquement détachée, caractérisé en ce que les éléments épais (1a, 1b) sont en outre réunis l'un à l'autre par deux jambes de force étroites et allongées (35a, 35b) disposées de part et d'autre du voile mince (2') et dirigées perpendiculairement à l'axe longitudinal de la ou des deux fentes (4a, 4b).

2. Témoin selon la revendication 1, caractérisé en ce que l'ensemble formé par le voile mince (2') et les éléments épais (1a, 1b) avec leurs jambes de force est relié par des zones flexibles (37a, 37b) à des parties de fixation (36a, 36b) sur la pièce.

3. Témoin selon la revendication 2, caractérisé en ce que les zones flexibles (37a, 37b) sont constituées par des ponts étroits s'étendant transversalement et ménagés à l'extérieur des jambes de force par rapport à l'axe longitudinal, dans des plaquettes (36a, 36b) qui appartiennent à la fois aux éléments épais et aux parties de fixation sur la pièce.

4. Témoin selon l'une des revendications précédentes, caractérisé en ce qu'il est constitué par deux ou plusieurs voiles minces (2') adjacents, positionnés dans le même plan et reliant l'un à l'autre les éléments épais (1a, 1b).

5. Témoin selon la revendication 4, caractérisé en ce que les éléments épais sont reliés l'un à l'autre par des ponts flexibles (38) disposés entre les voiles minces (2') adjacents.

## Claims

1. A fatigue tell tale for a mechanical part subjected to repeated stresses, comprising two thick elements (1a, 1b) which are spaced apart from each other and joined to each other by two first sides of a thin web (2') having one or two slits (4a, 4b) formed respectively in one or two second sides of the thin web, these two thick elements being incorporated in the part or fixed thereto so as to move with respect to each other in a plane which is parallel to the plane of the thin web, wherein the thick elements (1a, 1b) are disposed so as to define a gap with respect to each other in a direction substantially perpendicular to their direction of relative movement when the part is working, the thin web (2') being thus subjected to a shearing force in its plane, and wherein the slit or the two slits (4a, 4b) extend from one or both edges of said second side in said direction of relative movement, this direction thus corresponding to the longitudinal axis of the slit or of the two slits, so that, when the part is working, two cracks appear from said two edges, extend progressively in the thin web, and finish by each reaching the opposite edge of the thin web, or each joining the crack coming from this opposite edge, the central zone (5) of the thin web being thus detached or practically detached characterized in that the thick elements (1a, 1b) are further joined together by two narrow and elongate struts (35a, 35b) disposed on each side of the thin web (2') and directed perpendicularly to the longitudinal axis of the slit or of the two slits (4a, 4b).

2. The tell tale according to claim 1, characterized in that the assembly formed by the thin web (2') and the thick elements (1a, 1b) with their struts is connected by flexible zones (37a, 37b) to securing parts (36a, 36b) on the part.

3. The tell tale according to claim 2, characterized in that the flexible zones (37a, 37b) are formed by narrow bridges extending transversely and formed outwardly of the struts with respect to the longitudinal axis, in plates (36a, 36b) which belong both to the thick elements and to the securing portions on the part.

4. The tell tale according to one of the preceding claims, characterized in that it is formed by two or more thin adjacent webs positioned in the same plane and connecting the thick elements (1a, 1b) together.

5. The tell tale according to claim 4, characterized in that the thick elements are connected together by flexible bridges (38) disposed between the adjacent thin webs (2').

**Patentansprüche**

1. Vorrichtung zur Anzeige der Materialermüdung eines wiederholten Belastungen ausgesetzten Maschinenelementes, bestehend aus zwei stabilen Teilstücken (1a, 1b), die über zwei erste Seiten einer dünnen Fahne (2') in Abstand voneinander gehalten und miteinander verbunden sind, welche jeweils in einer oder zwei zweiten Seiten mit einem oder zwei Schlitzen (4a, 4b) versehen ist bzw. sind, wobei die beiden stabilen Teilstücke so im Maschinenelement eingebettet oder auf diesem befestigt sind, daß sie sich bei den Belastungen ausgesetztem mechanischem Element relativ zueinander in einer zur Fahnenebene im wesentlichen parallelen Ebene verschieben, in welcher die stabilen Teilstücke (1a, 1b) unter Ausbildung eines im wesentlichen senkrecht zur Richtung der Relativverschiebung der beiden stabilen Teile ausgerichteten Zwischenraumes angeordnet sind, wodurch die dünne Fahne (2') innerhalb ihrer Ebene einer Scherbelastung unterworfen ist, und in welcher der Schlitz oder die beiden Schlitze (4a, 4b) sich bis zu dem einen oder den beiden Rändern der beiden zweiten Seiten in besagter Richtung der Relativverschiebung erstrecken, die damit der Längsachse des Schlitzes oder der Schlitze entspricht, wobei sich bei unter Belastung stehendem Maschinenelement zwei Risse von den beiden Rändern her auszubilden beginnen, sich fortschreitend in die dünne Fahne hinein ausbreiten, und wobei dieser Reißvorgang beendet ist, sobald jeder Riß den gegenüberliegenden Rand der dünnen Fahne erreicht hat oder sich jeweils mit einem von diesem gegenüberliegenden Rand ausgehenden Riß vereinigt hat, wodurch sich der Mittelteil (5) der dünnen Fahne ablöst oder nahezu ablöst, dadurch gekennzeichnet, daß die stabilen Teilstücke (1a, 1b) der Anzeigevorrichtung zusätzlich durch zwei schmale, langgestreckte Stege (35a, 35b) miteinander verbunden sind, die beiderseites der dünnen Fahne (2') angeordnet und senkrecht zur Längsachse der einen oder beiden Schlitze (4a, 4b) ausgerichtet ist bzw. sind.

2. Anzeigevorrichtung nach Anspruch 1, dadurch gekennzeichnet, daß die von der dünnen Fahne (2') und den stabilen Teilstücken (1a, 1b) mit ihren Stegen gebildete Einheit über flexible Bereiche (37a, 37b) Befestigungsteilen (36a, 36b) an dem Maschinenelement befestigt ist.

3. Anzeigevorrichtung nach Anspruch 2, dadurch gekennzeichnet, daß die flexiblen Bereiche (37a, 37b) von schmalen Brücken gebildet sind, die sich in Querrichtung erstrecken und bezüglich der Längsachse außerhalb der Stege in den stabilen Teilstücken und den Befestigungsteilen gemeinsamen Plättchen (36a, 36b) angeordnet sind.

4. Anzeigevorrichtung nach einem der vorangegangenen Ansprüche, dadurch gekennzeichnet, daß diese Vorrichtung von mindestens zwei benachbarten, in derselben Ebene angeordneten dünnen Fahnen (2') gebildet ist, die das eine mit dem anderen stabilen Teilstück (1a, 1b) verbinden.

5. Anzeigevorrichtung nach Anspruch 4, dadurch gekennzeichnet, daß das eine stabile Teilstück mit dem anderen über flexible Brücken (38) verbunden ist, die zwischen benachbarten dünnen Fahnen (2') angeordnet sind.

FIG.1

FIG.2